# EUROPÄISCHE PATENTANMELDUNG

(11) **EP 2 105 782 A1**
(43) Veröffentlichungstag der Anmeldung: **30.09.2009**
(21) Anmeldenummer: 08153223.6
(22) Anmeldetag: 25.03.2008
(51) Int. Cl.: G02C 1/02, G02C 5/00, B23K 26/36

(54) **Verfahren und Vorrichtung zum Bearbeiten von beschichteten Brillengläsern**

(71) Anmelder: Anger, Wilhelm, 5020 Salzburg (AT)
(72) Erfinder: Anger, Wilhelm, 5020 Salzburg (AT)
(74) Vertreter: TBK-Patent

(57) **Zusammenfassung**

Mittels des Verfahrens und der Vorrichtung gemäß der Erfindung werden beschichtete Brillengläser (2) bearbeitet, um an diesen Fügeflächen auszubilden, die ein zuverlässiges Verkleben der Brillengläser (2) mit der Brücke und den Backen einer randlosen Brille ermöglichen. Bei dem Verfahren ist vorgesehen, dass für das jeweilige Brillenglas (2) zwei Bearbeitungsbereiche mit deren Gestalt, Größe und Ort am Brillenglas (2) vorgegeben werden und dass in den zwei vorgegebenen Bearbeitungsbereichen die Beschichtung am Brillenglas (2) lokal durch Bestrahlen mit einem Laserstrahl (30) abgetragen wird. Die Vorrichtung zeichnet sich aus durch eine Halteeinrichtung mit zumindest einer Aufnahme für ein Brillenglas (2), eine Laserstrahlvorrichtung mit einem Laserkopf (54) zur Erzeugung eines Laserstrahls (30), eine Stelleinrichtung (62) zum Bewegen der Halteeinrichtung und des Laserkopfes (54) relativ zueinander in einer Bezugsebene, und eine Steuereinrichtung (68) für die Laserstrahlvorrichtung und die Stelleinrichtung (62), wobei mittels der Steuereinrichtung (68) die Laserleistung, die Relativstellung zwischen dem Laserkopf (54) und dem zumindest einen Brillenglas (2) sowie eine Scanbewegung des Laserstrahls (30) steuerbar sind.

## Beschreibung

Die Erfindung bezieht sich auf ein Verfahren und eine Vorrichtung zum Bearbeiten von beschichteten Brillengläsern.

Es sind randlose Brillen bekannt, die aus zwei Brillengläsern, einer Brücke, zwei Backen und zwei Bügeln bestehen, die jeweils mit einer der beiden Backen gelenkig verbunden sind. Die Brücke ist einstückig mit einem Sattelsteg oder zwei Seitenstegen ausgebildet, oder sie trägt zwei Seitenstege oder einen Sattelsteg. Eine solche randlose Brille weist keine entlang den oberen Rändern und/oder den unteren Rändern der Brillengläser verlaufende Fassungsteile auf, die die Brücke mit den Backen verbinden. Vielmehr wird für den Zusammenhalt zwischen Backen und Brücke durch die dazwischen angeordneten Brillengläser gesorgt. Daher ist es notwendig, die Backen und die Brücke mechanisch hinreichend fest mit den Brillengläsern zu verbinden.

Es ist bereits bekannt, die Verbindung zwischen den Backen und der Brücke einerseits und dem jeweiligen Brillenglas andererseits dadurch herzustellen, dass im Brillenglas am Anbringungsort für die Backen bzw. die Brücke zunächst zumindest ein Durchgangsloch ausgebildet wird. In das Durchgangsloch kann eine Schraube bzw. ein Niet eingesetzt werden, um die Backe bzw. die Brücke mit dem Brillenglas zu verschrauben oder zu vernieten. Bekannt ist es auch, an dem zu befestigenden Bauteil, d.h. an der Backe oder der Brücke, einen Zapfen vorzusehen, der im Durchgangsloch des Brillenglases verklebt oder verdübelt wird. Diese bekannten Verbindungsarten haben den Nachteil, dass in den Brillengläsern Durchgangslöcher ausgebildet werden müssen. Während der Ausbildung der Durchgangslöcher beispielsweise durch Bohren besteht die Gefahr, dass das Brillenglas bricht, was zu einem beträchtlichen Ausschuss bei der Herstellung solcher randlosen Brillen führt. Ferner verursachen die Durchgangslöcher in den Brillengläsern eine strukturelle Schwächung und Mikrorisse und führt der von Schrauben oder Nieten ausgeübte Druck zu Spannungen in den Brillengläsern. Daraus resultiert eine erhöhte Bruchgefahr beim Gebrauch der Brille.

Es ist bereits vorgeschlagen worden, bei einer randlosen Brille die Brücke und/oder die Backen mit den Brillengläsern auf deren Vorder- oder Rückseite zu verkleben. Durch das Verkleben von Brücke und Backe mit den Brillengläsern soll und kann vermieden werden, dass Durchgangslöcher in den Brillengläsern ausgebildet werden müssen, so dass die mit der Ausbildung von Durchgangslöchern in den Brillengläsern beispielsweise durch Bohren verbundenen Nachteile vermieden werden.

Bisherige Bemühungen, eine randlose Brille dadurch herzustellen, dass die Backen und die Brücke mit der Vorderseite oder der Rückseite der Brillengläser verklebt werden, haben nicht zum Erfolg geführt, weil keine dauerhaft festen Klebeverbindungen erreicht werden konnten und die Klebeverbindungen häufig gebrochen sind.

Brillengläser weisen üblicherweise auf ihrer Vorderseite und ihrer Rückseite eine Beschichtung auf, die für Kratzfestigkeit und/oder Schmutz abweisende Eigenschaften und/oder bestimmte Reflexionseigenschaften der Oberflächen der Brillengläser sorgen soll. Die Erfinder haben erkannt, dass diese Beschichtung eine der wesentlichen Ursachen für mangelhafte Klebeverbindungen ist. Die Erfinder haben ferner gefunden, dass dauerhaft feste Klebeverbindungen dann erreicht werden können, wenn die Beschichtung im Bereich der Fügeflächen für die Klebeverbindung vor dem Verkleben abgetragen wird.

Der Erfindung liegt die Aufgabe zugrunde, ein geeignetes Verfahren zu schaffen, das es ermöglicht, an beschichteten Brillengläsern in begrenzten Bereichen die Beschichtung zu entfernen, um dadurch Fügeflächen für das Verkleben der Brillengläser mit Verbindungselementen der Brücke und der Backen zu schaffen. Es soll möglich sein, die Beschichtung präzise in zuvor definierten Bereichen zu entfernen, und es soll ferner möglich sein, die Beschichtung bis zu ihrer gesamten Dicke zu entfernen, ohne dass dabei nennenswert Grundwerkstoff des Brillenglases entfernt wird. Ferner liegt der Erfindung die Aufgabe zugrunde, eine zur Durchführung dieses Verfahrens geeignete Vorrichtung zu schaffen.

Die erstgenannte Aufgabe wird erfindungsgemäß gelöst durch das im Patentanspruch 1 definierte Verfahren. Erfindungsgemäß ist vorgesehen, dass für das jeweilige Brillenglas zwei Bearbeitungsbereiche mit deren Gestalt, Größe und Ort am Brillenglas vorgegeben werden und dass in den zwei vorgegebenen Bearbeitungsbereichen die Beschichtung am Brillenglas lokal durch Bestrahlen mit einem Laserstrahl abgetragen wird.

Die zweitgenannte Aufgabe wird erfindungsgemäß gelöst durch die im Patentanspruch 10 definierte Vorrichtung. Diese Vorrichtung weist auf eine Halteeinrichtung mit zumindest einer Aufnahme für ein Brillenglas, eine Laserstrahlvorrichtung mit einem Laserkopf zur Erzeugung eines Laserstrahls, wobei die Laserleistung des Laserstrahls derart steuerbar ist, dass sie zum Bearbeiten des zumindest einen Brillenglases durch lokales Abtragen von dessen Beschichtung ausreicht, so dass der Laserkopf zum Bearbeiten des zumindest einen Brillenglases geeignet ist, eine Stelleinrichtung zum Bewegen der Halteeinrichtung und des Laserkopfes relativ zueinander in einer Bezugsebene, und eine Steuereinrichtung für die Laserstrahlvorrichtung und die Stelleinrichtung, wobei mittels der Steuereinrichtung die Laserleistung, die Relativstellung zwischen dem Laserkopf und dem zumindest einen Brillenglas sowie eine Scanbewegung des Laserstrahls steuerbar sind.

Vorteilhafte Weiterbildungen der Erfindung sind in den abhängigen Ansprüchen definiert.

Die Merkmale der Erfindung und deren vorteilhafte Wirkungen werden im Folgenden anhand von Ausführungsbeispielen und unter Bezugnahme auf die Zeichnungen näher erläutert. In den Zeichnungen zeigen:
Figur 1 eine perspektivische Ansicht einer randlosen Brille, bei deren Herstellung das erfindungsgemäße Verfahren und die erfindungsgemäße Vorrichtung anwendbar sind;
Fig. 2 eine Vorderansicht des linken Brillenglases der Brille gemäß Figur 1;
Figur 3 in ähnlicher Darstellung wie in Figur 2 ein Brillenglas, das sich von dem in Figur 2 gezeigten Brillenglas durch seine Scheibenform unterscheidet;
Figur 4 ausschnittsweise und in vergrößerter Darstellung einen Bearbeitungsbereich an einem Brillenglas;
Figur 5 eine schematische Schnittdarstellung gemäß A-B in Figur 4;
Figur 6 eine Seitenansicht eines Brillenglases in Verbindung mit einem Glashalter;
Figur 7 eine perspektivische und schematische Darstellung einer Vorrichtung gemäß einem ersten Ausführungsbeispiel der Erfindung;
Figuren 8A, 8B und 9 schematische Darstellungen eines Brillenglases, eines Laserkopfes und eines vom Laserkopf ausgesandten Laserstrahls zur Erläuterung einer vom Laserstrahl ausgeführten Abtast- bzw. Scanbewegung;
Figur 10 ein Blockdiagramm von Elementen der Vorrichtung gemäß dem ersten Ausführungsbeispiel;
Figur 11 ein Bezugskoordinatensystem der Vorrichtung gemäß dem ersten Ausführungsbeispiel sowie in der Vorrichtung angeordnete Brillengläser;
Figur 12 in ähnlicher Darstellung wie in Figur 5 ausschnittsweise ein Brillenglas während der Bearbeitung;
Figur 13 ein Diagramm, das die Steuerung einer Laserleistung in Abhängigkeit vom Einfallswinkel eines Laserstrahls zeigt;
Figur 14 eine perspektivische und schematische Darstellung einer Vorrichtung gemäß einem zweiten Ausführungsbeispiel der Erfindung;
Figur 15 ein Blockdiagramm von Elementen der Vorrichtung gemäß dem zweiten Ausführungsbeispiel;
Figur 16 ein Blockdiagramm mit Verfahrensschritten des Verfahrens gemäß einem zweiten Ausführungsbeispiel der Erfindung;
Figur 17 eine Draufsicht auf ein Brillenglas, während dessen Umriss vermessen wird;
Figur 18 das Brillenglas gemäß Figur 17 bei Betrachtung in Richtung eines Pfeils C in Figur 17;
Figur 19 eine Seitenansicht eines Brillenglases, während dessen Krümmung vermessen wird;
Figur 20 eine Draufsicht auf ein Brillenglas, während Bearbeitungsbereiche an dem selben bearbeitet werden; und
Figur 21 eine Ansicht des Brillenglases bei Betrachtung in Richtung eines Pfeils E in Figur 20.

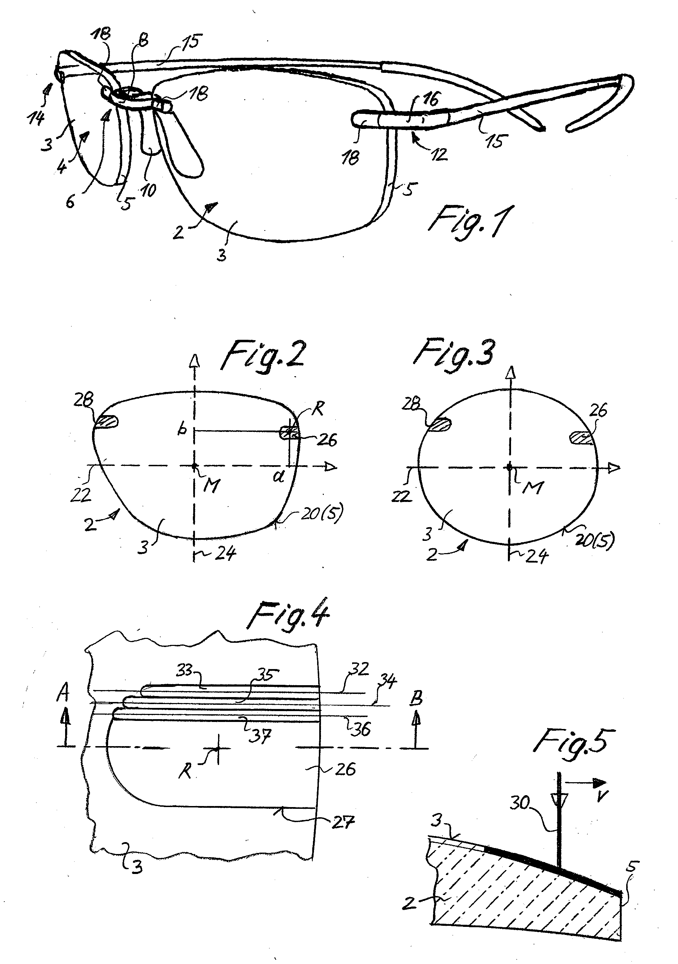

Im Folgenden wird zunächst anhand der Figuren 1 bis 3 ein Ausführungsbeispiel einer randlosen Brille erläutert, bei deren Herstellung das erfindungsgemäße Verfahren und die erfindungsgemäße Vorrichtung anwendbar sind.

Figur 1 zeigt eine randlose Brille in perspektivischer Ansicht von schräg vorn. Die Brille umfasst ein linkes Brillenglas 2, ein rechtes Brillenglas 4 und eine zwischen den beiden Brillengläsern angeordnete Brücke 6. Jedes der beiden Brillengläser 2 und 4 hat eine in Figur 1 sichtbare Vorderseite 3 und einen umlaufenden Rand 5, der das Brillenglas radial außen, bezogen auf seine geometrischen und optischen Mittelpunkte, begrenzt. Die Brücke 6 ist ein langgestrecktes Element, das zwischen den beiden Brillengläsern 2 und 4 angeordnet ist und diese miteinander verbindet. Die Brücke umfasst einen Grundkörper 8 und zwei Verbindungselementen 18, die jeweils an einem Ende der Brücke 6 angeordnet sind und mit der Vorderseite 3 des Brillenglases 2 bzw. 4 verklebt sind. Ein Stegbauteil 10 ist an der Brücke 6 befestigt und dient zur Abstützung der Brille an der Nase des Brillenträgers.

Die Brille weist ferner eine linke Backe 12 und eine rechte Backe 14 auf. Die Backen 12 und 14 sind jeweils mit einem Bügel 15 derart gelenkig verbunden, dass die Bügel 15 aus ihren in Figur 1 dargestellten geöffneten Stellungen geschwenkt werden können in Stellungen, in denen Sie im Wesentlichen parallel zu den beiden Brillengläsern 2 und 4 verlaufen.

Jede der beiden Backen 12 und 14 umfasst einen Grundkörper 16 und ein Verbindungselement 18, das an dem vom Bügel 15 abgewandten Ende der Backe 12 bzw. 14 angeordnet ist. Die Verbindungselemente 18 der beiden Backen 12 und 14 sind jeweils an einem von der Brücke 6 abgewandten Randbereich des Brillenglases 2 bzw. 4 mit dessen Vorderseite 3 verklebt.

Die Verbindungselemente 18 der Brücke 6 und der Backen 12 und 14 bestehen üblicherweise aus einem spritzgießbaren Kunststoff, beispielsweise einem aliphatischen, thermoplastischen Polyether-Polyurethan, wie es beispielsweise von der Firma Bayer AG Bayer Polymers unter der Bezeichnung Texin DP7-3007 vertrieben wird. Der Grundkörper 8 der Brücke 6 und die Grundkörper 16 der Backen 12 und 14 bestehen aus einem metallischen Werkstoff oder aus einem spritzgießbaren Kunststoff und sind mit dem jeweiligen Verbindungselement 18 fest verbunden. Zu diesem Zweck ist ein nicht dargestellter, freier Endabschnitt des jeweiligen Grundkörpers 8 bzw. 16 in das zugeordnete Verbindungselement 18 eingesteckt und darin fest verankert durch Formschluss und/oder Kraftschluss und/oder Verkleben. Alternativ kann die feste Verbindung zwischen dem Verbindungselement und dem jeweiligen Grundkörper dadurch hergestellt sein, dass das Verbindungselement an dem freien Endabschnitt des Grundkörpers angespritzt worden ist. Abweichend vom beschriebenen Ausführungsbeispiel können der jeweilige Grundkörper und das Verbindungselement bzw. die Verbindungselemente einstückig aus demselben Werkstoff gefertigt sein.

Als Grundwerkstoff für die Brillengläser kommen die üblichen Brillenglaswerkstoffe in Frage. Zu diesen gehören insbesondere Kunststoffe, wie beispielsweise Polycarbonate und Allyldiklykolcarbonat, das unter der Bezeichnung CR39 als Brillenglaswerkstoff bekannt ist.

Jedes der beiden Brillengläsern 2 und 4 ist ein beschichtetes Brillenglas. Dies bedeutet, dass es auf seiner Vorderseite und seiner Rückseite eine Beschichtung aufweist, wobei sich die Beschichtungen auf der Vorderseite und der Rückseite voneinander unterscheiden können. Die jeweilige Beschichtung ist üblicherweise aus mehreren Schichten aufgebaut. Beispielsweise kann eine Schicht der Beschichtung eine sogenannte Hartschicht sein, die für Kratzfestigkeit der Oberfläche des Brillenglases sorgen soll. Auf der Hartschicht kann sich eine Entspiegelungsschicht befinden, die ihrerseits aus mehreren Schichten bestehen kann. Die Entspiegelungsschicht soll regelmäßige Reflexion unterdrücken. Alternativ kann, wenn ein hoher Reflexionsgrad gewünscht wird, eine Verspiegelungsschicht aufgebracht sein. Die oberste Schicht der Beschichtung ist beispielsweise eine Schmutz abweisende Schicht, die hydrophobe und oleophobe Eigenschaften hat und dem Anhaften von Schmutz vorbeugen soll. Die Gesamtdicke einer Beschichtung liegt üblicherweise im Bereich von weniger als 1 µm bis zu wenigen Mikrometern.

Die beschichteten Brillengläser 2 und 4 haben eine sogenannte Scheibenform. Als Scheibenform wird üblicherweise die geometrische Gestalt des Umrisses bzw. der Kontur des Brillenglases bei Betrachtung desselben von seiner Vorderseite oder seiner Rückseite aus bezeichnet. Figur 2 zeigt eine Ansicht des linken Brillenglases 2 der Brille gemäß Figur 1 bei Betrachtung von dessen Vorderseite 3. Das Brillenglas 2 ist nach radial außen durch seinen Umriss 20 begrenzt, der in Figur 2 mit dem Rand 5 des Brillenglases zusammenfällt.

Ein Brillenglas wird üblicherweise dadurch hergestellt, dass, ausgehend von einem Brillenrohglas mit kreisförmigem Umriss, durch Schneiden und/oder Schleifen von dem Brillenrohglas soviel Material entfernt wird, dass das Brillenglas mit dem gewünschten Umriss 20 bzw. der gewünschten Scheibenform erhalten wird.

Die Brillengläser 2 und 4 haben jeweils eine Mittellinie 22 und eine Scheibensenkrechte 24 (siehe Figur 2). Die Mittelinie 22 verläuft durch den geometrischen Mittelpunkt M des Brillenglases und verbindet die geometrischen Mittelpunkte der beiden Brillengläser der fertigen Brille. Die Scheibensenkrechte 24 schneidet die Mittellinie 22 senkrecht im geometrischen Mittelpunkt M des Brillenglases. Die Mittellinie 22 und die Scheibensenkrechte 24 sind Hilfslinien, die an den Brillengläsern markiert werden können (aber nicht markiert werden müssen), wobei die entsprechenden Markierungen, wenn sie nicht mehr benötigt werden, entfernt werden und an der fertigen Brille nicht mehr sichtbar sind. Die Mittellinie 22 und die Scheibensenkrechte 24 definieren ein Glaskoordinatensystem, in dem der Ort jedes Punktes auf der Oberfläche und am Rand des Brillenglases durch seine Koordinaten bestimmt ist. Statt des geometrischen Mittelpunktes kann ein anderer am Brillenglas definierter Punkt als Koordinatenursprung des Glaskoordinatensystems dienen.

Wie bereits erläutert wurde, sind die Verbindungselemente 18 auf der Vorderseite 3 des jeweiligen Brillenglases 2 bzw. 4 angeordnet, wozu sie im Verlauf der Fertigung der randlosen Brille mit der Vorderseite 3 verklebt werden. Alternativ dazu können die Verbindungselemente 18 auch mit der Rückseite des jeweiligen Brillenglases verklebt werden. Im Folgenden wird davon ausgegangen, dass die Verbindungselemente 18 mit der Vorderseite 3 des Brillenglases 2 bzw. 4 verklebt werden, wobei die folgenden Erläuterungen sinngemäß auch für den Fall gelten, dass die Verbindungselemente 18 mit den Rückseiten der Brillengläser verklebt werden. Ferner schließt das Verkleben der Verbindungselemente 18 mit der Vorderseite oder der Rückseite nicht aus, dass das jeweilige Verbindungselement 18 zusätzlich mit dem Rand 5 des Brillenglases verklebt wird und ist.

Jedes mit dem Brillenglas zu verklebende Verbindungselement weist eine Fügefläche auf. Das Brillenglas weist für jedes der anzuklebenden Verbindungselemente eine Fügefläche auf, die in Gestalt und Größe komplementär zu der Fügefläche des Verbindungselementes ist. Im Verlauf der Fertigung der randlosen Brille wird das jeweilige Verbindungselement mit seiner Fügefläche an die zugeordnete Fügefläche am Brillenglas angesetzt und mittels eines zwischen die Fügeflächen eingebrachten Klebstoffs oder einer zwischen den Fügeflächen angeordneten, beidseitig mit einer Klebstoffschicht versehenen Klebefolie mit dem Brillenglas verklebt.

Die Fügeflächen am Brillenglas werden dadurch ausgebildet, dass im Bereich einer auszubildenden Fügefläche die Beschichtung in ihrer gesamten Dicke abgetragen wird, so dass im Bereich der Fügefläche der Grundwerkstoff des Brillenglases freiliegt. Dies erfolgt, damit eine dauerhaft feste Klebeverbindung zwischen den Verbindungselementen und den Brillengläsern erzielt wird. Das Abtragen der Beschichtung am Brillenglas erfolgt dementsprechend in einem Bereich, der hinsichtlich seines Ortes am Brillenglas und seiner Gestalt und Größe übereinstimmt mit der Gestalt und der Größe und dem Ort der am Brillenglas auszubildenden Fügefläche. Dieser Bereich wird im Folgenden als Bearbeitungsbereich bezeichnet.

In Figur 2 sind ein Bearbeitungsbereich 26 und ein Bearbeitungsbereich 28 als schraffierte Flächen gezeigt. In dem Bearbeitungsbereich 26 wird die Fügefläche ausgebildet, an der das Verbindungselement für die linke Backe der Brille angebracht wird, und in dem Bearbeitungsbereich 28 wird die Fügefläche ausgebildet, an der eines der Verbindungselemente der Brücke angebracht wird.

Die Scheibenform des Brillenglases und somit dessen Umriss 20 sind vorgegeben durch das vom Brillenträger oder vom Brillenhersteller gewählte Brillendesign. Auch die Orte der Bearbeitungsbereiche 26 und 28 am Brillenglas sind vorgegeben durch das gewählte Brillendesign. Der Brillenhersteller gibt Gestalt und Größe der Bearbeitungsbereiche 26 und 28 in Abhängigkeit von Gestalt und Größe der Fügefläche am Verbindungselement vor. Der Ort der Bearbeitungsbereiche am Brillenglas kann beispielsweise in dem Glaskoordinatensystem vorgegeben werden durch die Koordinaten a und b eines Bezugspunktes R im Bearbeitungsbereich, wie dies für den Bearbeitungsbereich 26 in Figur 2 gezeigt ist. In diesem Fall werden Gestalt und Größe des Bearbeitungsbereichs vorgegeben durch die Abstände (in Richtung der Mittellinie 22 und in Richtung der Scheibensenkrechten 24) von Punkten der Kontur 27 des Bearbeitungsbereichs (siehe Figur 4) vom Bezugspunkt R. Alternativ können Gestalt, Größe und Ort des Bearbeitungsbereichs vorgegeben werden durch Definieren der Kontur 27 des Bearbeitungsbereichs in dem Glaskoordinatensystem.

Bei dem in Figur 2 gezeigten Brillenglas 2 reichen die Bearbeitungsbereiche 26 und 28 jeweils bis zum Rand 5 des Brillenglases. Abweichend hiervon können die Bearbeitungsbereiche 26 und 28 in einem gewissen Abstand vom Rand 5 am Brillenglas angeordnet sein.

Es sind zahlreiche verschiedene Scheibenformen von Brillengläsern bekannt, und neue Scheibenformen werden in Zukunft entwickelt werden. Die vorliegende Erfindung ist anwendbar bei Brillengläsern mit beliebiger Scheibenform, wobei jedoch das Brillenglas zu dem Zeitpunkt, zu dem es nach dem erfindungsgemäßen Verfahren und mittels der erfindungsgemäßen Vorrichtung bearbeitet wird, seine vorgegebenen Scheibenform hat. Figur 3 zeigt in ähnlicher Darstellung wie in Figur 2 ein Brillenglas mit einer anderen Scheibenform als der des Brillenglases gemäß Figur 2, wobei die in Figur 3 gezeigte Scheibenform lediglich ein Beispiel für eine der zahlreichen möglichen vorgebbaren Scheibenformen ist.

Erfindungsgemäß wird die Beschichtung am Brillenglas in dem Bearbeitungsbereich lokal durch Bestrahlen mit einem Laserstrahl abgetragen. Dies ist schematisch in den Figuren 4 und 5 gezeigt, wobei Figur 4 ausschnittsweise und vergrößert den Bearbeitungsbereich 26 des Brillenglases 2 bei Betrachtung von dessen Vorderseite 3 zeigt. Ein mittels einer weiter unten näher erläuterten Laserstrahlvorrichtung erzeugter Laserstrahl 30 wird auf das Brillenglas 2 derart gerichtet, dass er zumindest in dem Bearbeitungsbereich 26 auf das Brillenglas trifft. Dabei werden der Laserstrahl 30 und das Brillenglas 2 relativ zueinander mit einer Abtast- bzw. Scangeschwindigkeit v derart verschoben bzw. bewegt, dass der Auftreffpunkt des Laserstrahls 30 am Brillenglas 2 eine beispielsweise gerade Linie bzw. Zeile 32 überstreicht. In Figur 5 wird zu diesem Zweck der Laserstrahl 30 vorzugsweise parallel zu sich selbst verschoben, während das Brillenglas 2 stationär bleibt. Auf gleiche Weise werden weitere Zeilen 34 und 36 vom Auftreffpunkt des Laserstrahls 30 überstrichen, so dass schließlich der gesamte Bearbeitungsbereich 26 vom Laserstrahl 30 überstrichen worden ist. Die zum Überstreichen einer Zeile und zum Übergang von einer Zeile zu einer anderen erforderliche Relativbewegung zwischen dem Laserstrahl 30 und dem Brillenglas 2 wird im Folgenden als Abtast- bzw. Scanbewegung bezeichnet.

Der Laserstrahl 30 hat eine kleine Querschnittsfläche und ist vorzugsweise ein sogenannter Parallelstrahl, d.h. ein aus zueinander parallelen Lichtstrahlen bestehender Strahl. Die Laserleistung, d.h. die Leistung des Laserstrahls 30, wird derart eingestellt, dass die Leistungsdichte, d.h. die je Zeiteinheit und Flächeneinheit am Auftreffpunkt eingestrahlte Energiemenge, unter Berücksichtigung der Scangeschwindigkeit v ausreicht, um die Beschichtung bis zur ihrer gesamten Dicke zu zerstören und dadurch Streifen 33, 35 und 37 und weitere Streifen der Beschichtung abzutragen. Diese Leistung hat der Laserstrahl 30 nur, während er den Bearbeitungsbereich 26 überstreicht, damit das Abtragen der Beschichtung auf den Bearbeitungsbereich 26 beschränkt ist.

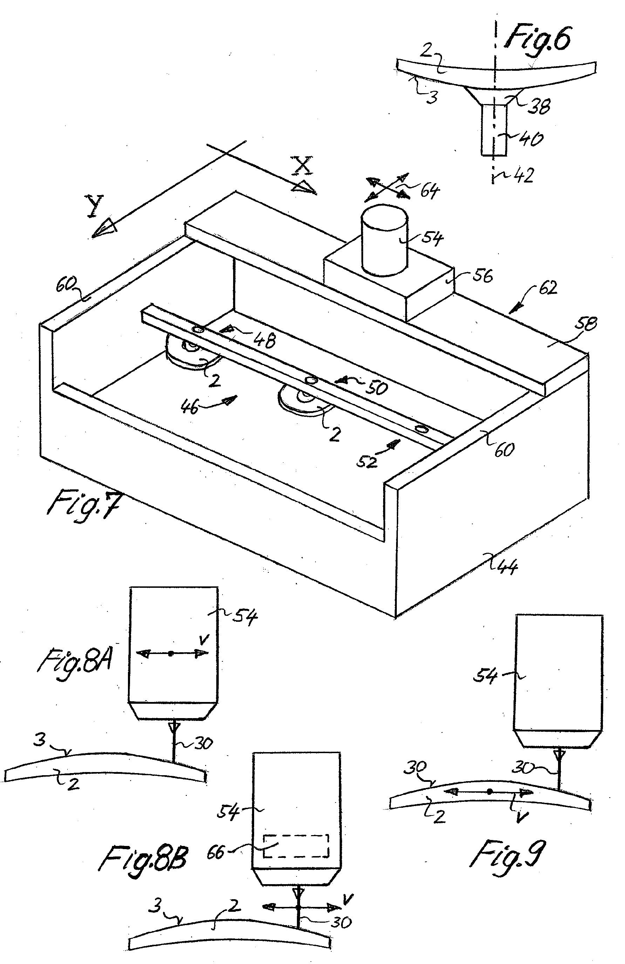

Im Folgenden wird unter Bezugnahme auf die Figuren 6 bis 13 ein erstes Ausführungsbeispiel des erfindungsgemäßen Verfahrens und der erfindungsgemäßen Vorrichtung erläutert.

Jedes auf die vorstehend anhand Figuren 4 und 5 erläuterte Weise zu bearbeitende Brillenglas wird zum Zweck der Bearbeitung an einem Glashalter 38 lösbar befestigt (siehe Figur 6). Dies kann der Glashalter sein, an dem das Brillenglas lösbar befestigt worden ist, um es zu handhaben, während die Scheibenform des Brillenglases ausgebildet wird. Der Glashalter 38 weist einen Zapfen 40 auf und wird am Brillenglas 2 üblicherweise derart befestigt, dass die Achse 42 des Zapfens 40 durch den geometrischen Mittelpunkt M des Brillenglases verläuft, also durch den Schnittpunkt der Mittellinie 22 und der Scheibensenkrechten 24. In Figur 6 ist das Brillenglas 2 mit seiner Vorderseite 3 am Glashalter 38 befestigt.

Die in Figur 7 schematisch und perspektivisch dargestellte Vorrichtung gemäß dem ersten Ausführungsbeispiel der Erfindung umfasst ein Gehäuse 44, in dem eine Halteeinrichtung 46 für Brillengläser angeordnet ist. Die Halteeinrichtung 46 dient dazu, eines oder mehrere Brillengläser derart zu halten, dass der Laserstrahl während der Bearbeitung in erforderlicher Weise auf das jeweilige Brillenglas gerichtet werden und dieses überstreichen kann. Die Halteeinrichtung 46 weist zumindest eine Aufnahme für ein Brillenglas auf. Bei dem dargestellten Ausführungsbeispiel ist die Halteeinrichtung 46 eine Stange und weist sie eine erste Aufnahme 48, eine zweite Aufnahme 50 und eine dritte Aufnahme 52 auf, die jeweils durch einen Abschnitt der Stange und ein in dem Abschnitt ausgebildetes Zapfenloch gebildet sind, in das der Zapfen 40 des Glashalters 38 gesteckt werden kann.

Der Vorrichtung ist ein zweidimensionales Bezugskoordinatensystem zugeordnet, das bei dem dargestellten Ausführungsbeispiel die in Figur 7 gezeigten, zueinander senkrechten Koordinatenachsen X und Y hat. Diese Koordinatenachsen X und Y definieren eine Bezugsebene. Die Aufnahmen 48, 50 und 52 halten das jeweils an ihnen angeordnete Brillenglas derart, dass dessen optische Achse (nicht dargestellt) im Wesentlichen senkrecht zu der Bezugsebene verläuft.

Die Vorrichtung gemäß dem ersten Ausführungsbeispiel weist ferner eine Laserstrahlvorrichtung auf. Als Laserstrahlvorrichtung wird in dieser Beschreibung und den Patentansprüchen eine Vorrichtung bezeichnet, die in gesteuerter Weise einen Laserstrahl erzeugt und aussendet, mittels dessen eine Oberfläche überstrichen werden kann, um diese zu vermessen und/oder zu bearbeiten. Die Laserstrahlvorrichtung umfasst einen Laserkopf 54, in dem ein (nicht dargestellter) Laser angeordnet ist, der eine Laserlichtquelle und eine Laseroptik umfasst. Der Laser erzeugt in gesteuerter Weise Laserlicht, das von der Laseroptik zu dem Laserstrahl 30 geformt wird. Der Laserkopf 54 sendet den Laserstrahl 30 vorzugsweise in zu der Bezugsebene senkrechter Richtung aus. Ferner umfasst die Laserstrahlvorrichtung eine Treiber- und Ansteuerelektronik, die in eine weiter unten erläuterte Steuereinrichtung integriert ist.

Der Laserkopf 54 ist an einem ersten Schlitten 56 angeordnet und wird von diesem getragen. Der erste Schlitten 56 ist an einem zweiten Schlitten 58 angeordnet, der den ersten Schlitten 56 trägt und führt. Der erste Schlitten 56 ist an dem zweiten Schlitten 58 bewegbar in einer ersten Richtung, die beim dargestellten Ausführungsbeispiel die Richtung der Koordinatenachse X ist. Der zweite Schlitten 58 wird von Schienen 60 getragen und geführt, die am Gehäuse 44 befestigt sind und in Richtung der Koordinatenachse Y verlaufen. Zum Verfahren des ersten Schlittens 56 relativ zum zweiten Schlitten 58 und zum Verfahren des zweiten Schlittens 58 auf den Schienen 60 relativ zum Gehäuse 44 sind nicht dargestellte Stellantriebe vorgesehen. Die beiden Schlitten 56 und 58, die Schienen 60 und die nicht dargestellten Stellantriebe sind Elemente einer Stelleinrichtung 62, mittels der der Laserkopf 54 der Laserstrahlvorrichtung einerseits und die Halteeinrichtung 46 mit ihren Aufnahmen 48, 50 und 52 andererseits in jede gewünschte Position relativ zueinander in der Bezugsebene bewegt werden können. Beim dargestellten Ausführungsbeispiel erfolgt dies durch Bewegen bzw. Verfahren des Laserkopfes 54 in der durch die Koordinatenachsen X und Y definierten Bezugsebene relativ zu der in der Vorrichtung stationär angeordneten Halteeinrichtung 46.

Die Stelleinrichtung 62 kann ferner eine nicht dargestellte, am ersten Schlitten 56 angeordnete Feineinstelleinrichtung aufweisen, mittels der der Laserkopf 54 relativ zum ersten Schlitten 56 in Richtung der Koordinatenachsen X und Y bewegt bzw. verfahren werden kann, wie dies durch sich kreuzende Doppelpfeile 64 in Figur 7 angedeutet ist.

Die Stelleinrichtung 62 dient dazu, den Laserkopf 54 in jede gewünschte Position oberhalb von an den Aufnahmen 48, 50 und 52 angeordneten Brillengläsern zu bewegen. Die zum Bearbeiten der Brillengläser in der vorstehend anhand der Figuren 4 und 5 prinzipiell erläuterten Weise erforderliche Scanbewegung, d.h. die Relativbewegung zwischen dem Laserstrahl 30 und dem Brillenglas 2, kann ausgeführt werden, indem der Laserkopf 54 insgesamt mittels der Stelleinrichtung 62 oberhalb eines Bearbeitungsbereichs so bewegt wird, dass der Laserkopf 54 selbst die Scanbewegung mit der Scangeschwindigkeit v ausführt. Dies ist schematisch in Figur 8A gezeigt. Alternativ dazu kann die Scanbewegung des Laserstrahls 30 mittels einer Strahlablenkeinrichtung 66 bewirkt werden, die in den Laserkopf 54 integriert ist (siehe Figur 8B). In diesem Fall steht der Laserkopf 54 stationär über dem Bearbeitungsbereich und verschiebt die Strahlablenkeinrichtung 66 den Laserstrahl 30 parallel zu sich selbst mit der Scangeschwindigkeit v. Dies ist schematisch in Figur 8B gezeigt.

Bei dem vorstehend beschriebenen und in Figur 7 gezeigten Ausführungsbeispiel ist der Laserkopf 54 an der Stelleinrichtung 62 angeordnet und dient diese dazu, den Laserkopf 54 in jede gewünschte Position bezüglich der an der Halteeinrichtung 46 angeordneten Brillengläser zu bewegen. In Abwandlung dieses Ausführungsbeispiels kann vorgesehen sein, dass die Halteeinrichtung 46 an der Stelleinrichtung 62 angeordnet ist, während der Laserkopf 54 der Laserstrahlvorrichtung vorrichtungsfest am oder im Gehäuse 44 angeordnet ist, so dass die Stelleinrichtung dazu dient, die Halteeinrichtung und die an dieser angeordneten Brillengläser in jede gewünschte Position bezüglich des Laserkopfes 54 zu bewegen. Bei dieser abgewandelten Ausführungsform kann dann die Scanbewegung ausgeführt werden, indem jedes Brillenglas 2 mit der Scangeschwindigkeit v bewegt wird, während der Laserkopf keine Bewegung ausführt, wie dies schematisch in Figur 9 gezeigt ist. Das weiter unten beschriebene zweite Ausführungsbeispiel des erfindungsgemäßen Verfahrens und der erfindungsgemäßen Vorrichtung kann in gleicher Weise abgewandelt sein. Im Folgenden wird auf diese Abwandlungen nicht weiter eingegangen, wobei die folgenden Erläuterungen sinngemäß auch für die abgewandelten Ausführungsformen gelten.

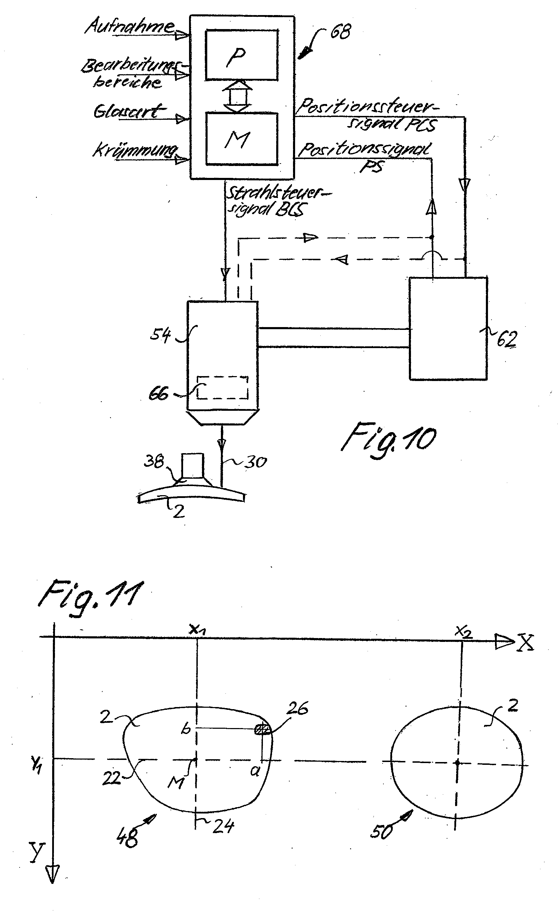

Die Vorrichtung gemäß dem ersten Ausführungsbeispiel umfasst ferner eine in Figur 10 gezeigte Steuereinrichtung 68. Mittels der Steuereinrichtung 68 werden die Stelleinrichtung 62 und die Laserstrahlvorrichtung gesteuert. Insbesondere werden die Position des Laserkopfes 54 in dem Bezugskoordinatensystem der Vorrichtung, die Leistung des vom Laserkopf 54 ausgesandten Laserstrahls 30 und die Scanbewegung des Laserstrahls 30 mittels der Steuereinrichtung 68 gesteuert.

Die Steuereinrichtung 68 und deren Zusammenwirken mit dem Laserkopf 54 und der Stelleinrichtung 62 sind schematisch in Figur 10 gezeigt. Die Steuereinrichtung 68 umfasst einen Prozessor P sowie einen Speicher M, in dem vom Prozessor P benötigte Algorithmen und Daten gespeichert sind. Auf die Steuereinrichtung 68 wird ein Positionssignal PS gegeben, aus dem die Steuereinrichtung 68 die Ist-Position des Laserstrahls 30 in dem Bezugskoordinatensystem berechnet. Im Bezugskoordinatensystem ist die Position des Laserstrahls 30 zugleich die Position des Auftreffpunktes des Laserstrahls 30 auf ein an einer der Aufnahmen angeordnetes Brillenglas, wenn der Laserstrahl senkrecht zu der Bezugsebene ausgestrahlt wird, wie dies vorzugsweise vorgesehen ist. Die Steuereinrichtung 68 erhält das Positionssignal PS von der Stelleinrichtung 62, oder sie erhält es von der Stelleinrichtung 62 und dem Laserkopf 54, wenn die Scanbewegung des Laserstrahls 30 mittels der in den Laserkopf 54 integrierten Strahlablenkeinrichtung 66 bewirkt wird.

Die Steuereinrichtung 68 gibt auf die Stelleinrichtung 62 und gegebenenfalls den Laserkopf 54 ein Positionssteuersignal PCS, aufgrund dessen die Stelleinrichtung 62 und gegebenenfalls die Strahlablenkeinrichtung 66 den Laserstrahl 30 an der durch das Positionssteuersignal PCS bestimmten Position im Bezugskoordinatensystem anordnet. Da das Positionssteuersignal PCS zeitlich variabel ist, wird durch das Positionssteuersignal PCS auch die Scanbewegung des Laserstrahls 30 im Bearbeitungsbereich gesteuert. Ferner gibt die Steuereinrichtung 68 auf den Laserkopf 54 ein Strahlsteuersignal BCS, entsprechend dem der Laserkopf 54 die Leistung des Laserstrahls 30 einstellt.

Damit ein Brillenglas mittels der vorstehend beschriebenen Vorrichtung bearbeitet werden kann, wird es an einer der Aufnahmen 48, 50 und 52 der Vorrichtung so angeordnet, dass seine Vorderseite dem Laserkopf 54 zugewandt ist, wenn der Laserkopf über der Aufnahme positioniert ist. Das Brillenglas mit der in Figur 2 gezeigten Scheibenform wird beispielsweise an der ersten Aufnahme 48 angeordnet, indem der Zapfen 40 des Glashalters 38 in das Zapfenloch der ersten Aufnahme 48 gesteckt wird, wobei die Mittellinie 22 und die Scheibensenkrechte 24 des Brillenglases parallel zu der Koordinatenachse X bzw. der Koordinatenachse Y ausgerichtet werden (siehe Figur 11). Wenn die Achse 42 des Zapfens 40 des Glashalters 38 durch den geometrischen Mittelpunkt M des Brillenglases und somit durch den Koordinatenursprung des Glaskoordinatensystems verläuft, liegt dann der geometrische Mittelpunkt M des Brillenglases im Bezugskoordinatensystem der Vorrichtung auf der Achse des Zapfenlochs der ersten Aufnahme 48. Der Ort der Achse des Zapfenlochs im Bezugskoordinatensystem ist bekannt und durch die Koordinaten x₁ und y₁ gegeben (siehe Figur 11). Auf gleiche Weise können weitere Brillengläser an den Aufnahmen 50 und 52 angeordnet werden. An der zweiten Aufnahme 50 wird beispielsweise ein Brillenglas mit der Scheibenform gemäß Figur 3 angeordnet.

Auf vorstehend beschriebene Weise erfolgt eine Zuordnung des jeweiligen Brillenglases zu einer der Aufnahmen. Das Brillenglas hat seine vorgegebene Scheibenform. Ferner sind für dieses Brillenglas die beiden Bearbeitungsbereiche nach Gestalt, Größe und Ort am Brillenglas im Glaskoordinatensystem vorgegeben. Für jedes der Brillengläser werden Daten, die die zugeordnete Aufnahme identifizieren, und Daten, die zumindest die Orte der beiden Bearbeitungsbereiche im Glaskoordinatensystem identifizieren, in die Steuereinrichtung 68 eingegeben. Dies sind in Figur 10 die Eingaben "Aufnahme" und "Bearbeitungsbereiche". Aus diesen Eingaben berechnet die Steuereinrichtung 68 für jedes Brillenglas die Orte der Bearbeitungsbereiche im Bezugskoordinatensystem. Die Koordinaten des Ortes des Bearbeitungsbereichs 26 am Brillenglas an der ersten Aufnahme 52 werden beispielsweise berechnet zu (x₁ + a) und (y₁ - b), wobei die Größen x₁, y₁, a und b die bereits vorstehend erläuterte Bedeutung haben.

Ferner berechnet die Steuereinrichtung 68 für jeden Bearbeitungsbereich dessen Kontur 27 (siehe Figur 4) im Bezugskoordinatensystem. Diese Berechnung erfolgt anhand von im Speicher M gespeicherten Daten zu Gestalt und Größe der Bearbeitungsbereiche oder aufgrund von Daten, die bei der Eingabe "Bearbeitungsbereiche" für die jeweilige Aufnahme bzw. das jeweilige Brillenglas in die Steuereinrichtung 68 eingegeben werden.

Auf der Grundlage dieser Berechnungen gibt die Steuereinrichtung 68 das Positionssteuersignal PCS derart vor, dass der Laserkopf 54 mittels der Stelleinrichtung 62 im Bezugskoordinatensystem oberhalb des jeweiligen Bearbeitungsbereichs positioniert wird und dass der Laserstrahl im gesamten Bearbeitungsbereich die Scanbewegung ausführt, die vorstehend bereits anhand der Figuren 4, 5, 8A und 8B erläutert worden ist.

Im einfachsten Fall steuert die Steuereinrichtung 68 über das Strahlsteuersignal BCS die Laserleistung derart, dass die Leistungsdichte am Auftreffpunkt des Laserstrahls 30 im Bearbeitungsbereich für alle in Frage kommenden Einfallswinkel am Auftreffpunkt und Glasarten zum Abtragen der Beschichtung ausreicht. Die hierzu erforderliche Laserleistung wird, unter Berücksichtigung des Scangeschwindigkeit v, durch Vorversuche ermittelt. Als Glasart wird hier der Grundwerkstoff des Brillenglases und der Aufbau der Beschichtung, d.h. die stoffliche Zusammensetzung, Dicke und Abfolge der Schichten der Beschichtung, bezeichnet.

Vorzugsweise wird jedoch die Laserleistung in Abhängigkeit von der jeweiligen Glasart gesteuert. Zu diesem Zweck wird für jede in Frage kommende Glasart in Vorversuchen ermittelt, welche Laserleistung erforderlich ist, um die jeweilige Beschichtung bei allen in Frage kommenden Einfallswinkeln bis zu ihrer gesamten Dicke im Bearbeitungsbereich abzutragen. Auf diese Weise erfolgt eine Zuordnung von Glasart und erforderlicher Laserleistung. Die Datenpaare aus Glasart und Laserleistung werden in einer Datentabelle im Speicher M der Steuereinrichtung 68 gespeichert. In diesem Fall werden in die Steuereinrichtung 68 für jede Aufnahme zusätzlich zu den die Bearbeitungsbereiche identifizierenden Daten Daten, die die Glasart identifizieren, eingegeben (Eingabe "Glasart" in Figur 10). Die Steuereinrichtung 68 steuert dann über das Strahlsteuersignal BCS an einer jeweiligen Aufnahme die Laserleistung im Bearbeitungsbereich in Abhängigkeit von der eingegebenen Glasart und dem für diese in der genannten Datentabelle gespeicherten Sollwert der Laserleistung. Auf diese Weise wird erreicht, dass die Laserleistung jeweils der Glasart des Brillenglases, insbesondere dem Aufbau der Beschichtung, so angepasst ist, dass im Bearbeitungsbereich die Beschichtung in ihrer gesamten Dicke abgetragen wird und der Grundwerkstoff des Brillenglases nicht oder nur unwesentlich abgetragen wird.

Um Variationen der Leistungsdichte im Bearbeitungsbereich zu vermeiden, wird die Laserleistung vorzugsweise in Abhängigkeit vom Einfallswinkel des Laserstrahls im Bearbeitungsbereich gesteuert, wie dies im Folgenden erläutert wird. Diese Steuerung kann zusätzlich zu der vorstehend erläuterten Steuerung der Laserleistung in Abhängigkeit von der Glasart oder alternativ dazu erfolgen.

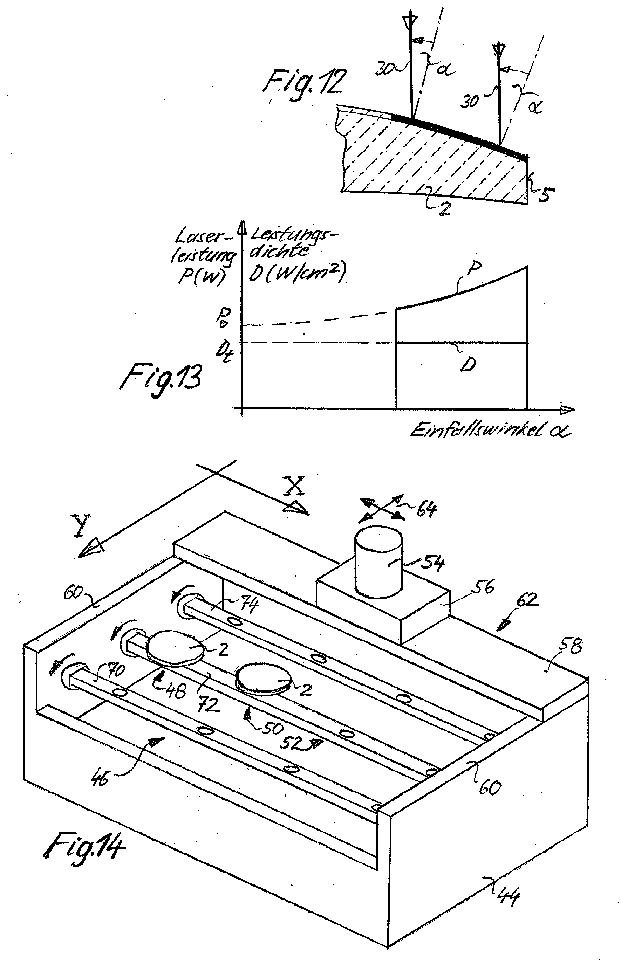

Üblicherweise sind bei jedem Brillenglas die Vorderseite und die Rückseite gekrümmt. Maß für die Krümmung ist beispielsweise der Krümmungsradius der Vorder- bzw. Rückseite insgesamt oder der lokale Krümmungsradius im Falle einer asphärischen Brillenglasoberfläche. Je nach der Position des Auftreffpunktes am Brillenglas im Bezugskoordinatensystem ist der Einfallswinkel α verschieden (siehe Figur 12). Bei konstanter Laserleistung während der Bearbeitung ist die Leistungsdichte am Auftreffpunkt maximal, wenn der Einfallswinkel α gleich Null ist, und nimmt die Leistungsdichte ab mit zunehmendem Einfallswinkel α. Dementsprechend ändert sich bei konstanter Laserleistung die Leistungsdichte während der Scanbewegung in Abhängigkeit von der Position des Auftreffpunktes des Laserstrahls im Bezugskoordinatensystem. Um dennoch die Leistungsdichte im Bearbeitungsbereich im Wesentlichen konstant zu halten, wird die Leistung des Laserstrahls in Abhängigkeit vom Einfallswinkel am Auftreffpunkt gesteuert. Zu diesem Zweck werden für jede Aufnahme in die Steuereinrichtung 68 Daten, die die Krümmung des Brillenglases identifizieren, eingegeben (Eingabe "Krümmung" in Figur 10). Aus den einer Aufnahme zugeordneten Eingaben zu den Bearbeitungsbereichen und zu der Krümmung berechnet die Steuereinrichtung im Bezugskoordinatensystem für jede Position des Auftreffpunktes des Laserstrahls 30 im Bearbeitungsbereich den Einfallswinkel α und daraus wiederum diejenige Leistung des Laserstrahls, die zur Erzielung einer konstanten Leistungsdichte im Bearbeitungsbereich erforderlich ist. Diese Leistung ist im Wesentlichen proportional zu (1/cosα). Auf der Grundlage dieser Berechnung der Laserleistung bestimmt die Steuereinrichtung 68 das auf den Scankopf 54 gegebene Strahlsteuersignal BCS.

Auf vorstehend beschriebene Weise wird erreicht, dass trotz der Krümmung der Oberfläche des Brillenglases und der dadurch verursachten Änderung des Einfallswinkels des Laserstrahls während der Scanbewegung im Bearbeitungsbereich die Leistungsdichte im gesamten Bearbeitungsbereich im Wesentlichen konstant bleibt und demzufolge die Beschichtung im gesamten Bearbeitungsbereich bis zu gleicher Tiefe abgetragen wird. Dies zeigt schematisch das Diagramm gemäß Figur 13, in dem die berechnete Laserleistung P und die Leistungsdichte D am Auftreffpunkt in Abhängigkeit vom Einfallswinkel α dargestellt sind. Die leistungsdichte D hat konstant den Wert Dₜ, der zum Abtragen der Beschichtung in ihrer gesamten Dicke erforderlich ist, während die Laserleistung vom Wert P₀ aus proportional zu (1/cosα) ansteigt. P₀ ist die Dₜ zugeordnete Laserleistung bei dem Einfallswinkel α = 0.

Im Folgenden wird unter Bezugnahme auf die Figuren 14 bis 21 ein zweites Ausführungsbeispiel des erfindungsgemäßen Verfahrens und der erfindungsgemäßen Vorrichtung erläutert. Elemente des zweiten Ausführungsbeispiels der erfindungsgemäßen Vorrichtung, die Elementen des ersten Ausführungsbeispiels gleichen oder entsprechen, sind mit den gleichen Bezugszeichen wie bei dem ersten Ausführungsbeispiel bezeichnet. Die Erläuterungen dieser Elemente im Zusammenhang mit dem ersten Ausführungsbeispiel gelten sinngemäß auch für das zweite Ausführungsbeispiel, sofern im Folgenden nichts anderes gesagt wird.

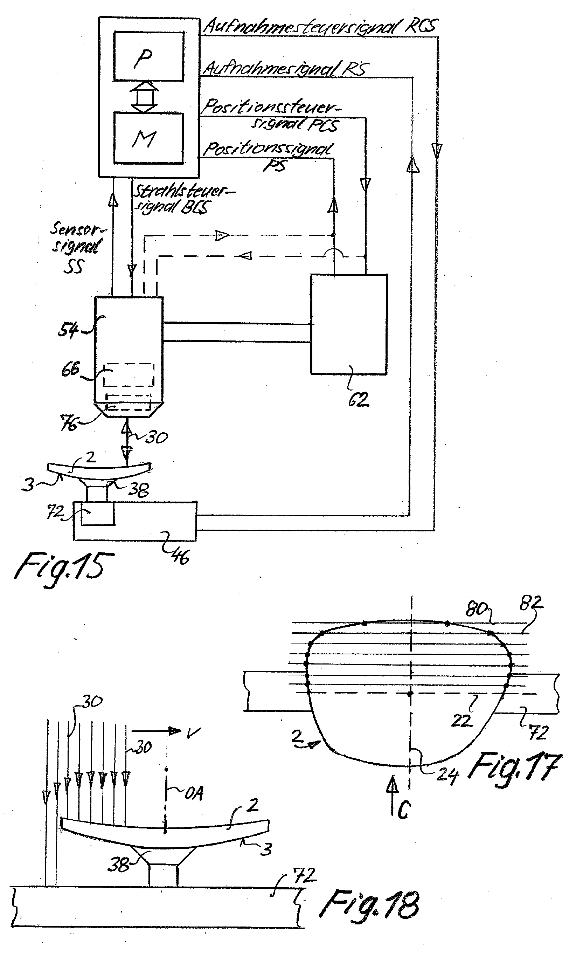

Die in Figur 14 schematisch und perspektivisch dargestellte Vorrichtung gemäß dem zweiten Ausführungsbeispiel unterscheidet sich von der Vorrichtung gemäß dem ersten Ausführungsbeispiel durch die Ausbildung ihrer Halteeinrichtung 46 und ihres Laserkopfes 54 sowie durch zusätzliche Funktionen der Steuereinrichtung 68. Figur 15 zeigt in ähnlicher Darstellung wie Figur 10 schematisch für das zweite Ausführungsbeispiel dessen Steuereinrichtung 68 und deren Zusammenwirken mit dem Laserkopf 54, der Stelleinrichtung 62 und der Halteeinrichtung 46.

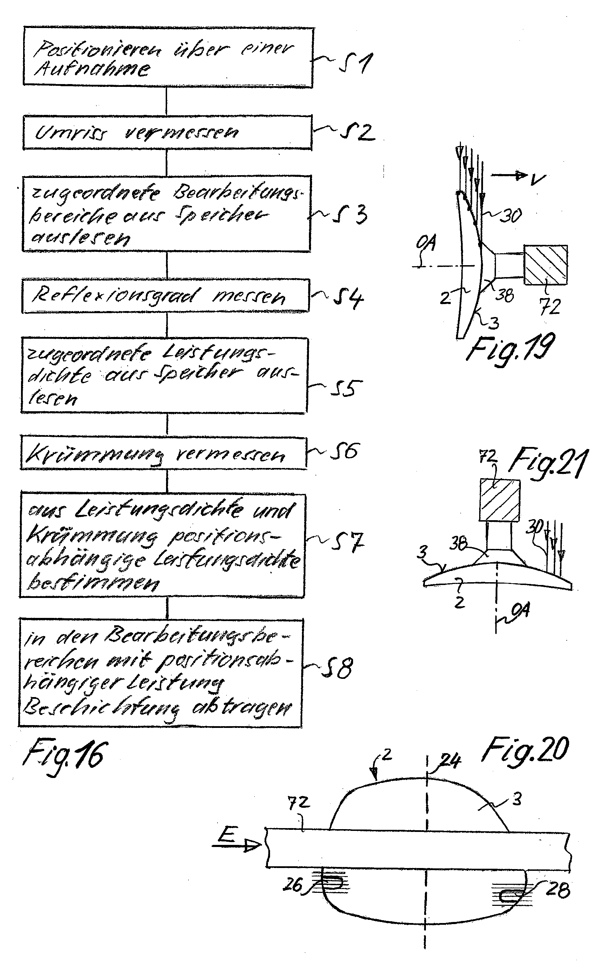

Die Halteeinrichtung 46 der Vorrichtung gemäß dem zweiten Ausführungsbeispiel umfasst mehrere parallel zueinander verlaufende Stangen 70, 72 und 74, die um ihre Längsachse dreh- bzw. schwenkbar im Gehäuse 44 gelagert sind. Jede der Stangen 70, 72 und 74 weist mehrere nebeneinander angeordneten Aufnahmen für ein Brillenglas auf, von denen in Figur 14 lediglich die Aufnahmen 48, 50 und 52 an der Stange 72 durch ihre Bezugszeichen identifiziert sind. Bei diesem Ausführungsbeispiel sind die Aufnahmen jeweils durch einen Abschnitt einer der Stangen 70, 72 und 74 und ein in dem Abschnitt ausgebildetes Zapfenloch gebildet, in das der Zapfen 40 eines Glashalters 38 eingesetzt werden kann. Wie bei dem ersten Ausführungsbeispiel ist beispielsweise das Brillenglas mit der in Figur 2 gezeigten Scheibenform an der Aufnahme 48 angeordnet und ist das Brillenglas mit der in Figur 3 gezeigten Scheibenform an der Aufnahme 50 angeordnet. Weitere Brillengläser können an allen übrigen Aufnahmen angeordnet sein. Wenn die Stangen70, 72 und 74 ihre in Figur 14 dargestellte Stellung einnehmen, halten deren Aufnahmen das jeweils an ihnen angeordnete Brillenglas derart, dass dessen optische Achse OA (siehe Figuren 18 und 19) im Wesentlichen senkrecht zu der Bezugsebene verläuft. Indem die Stangen 70, 72 und 74 und ihre Aufnahmen aus der in Figur 14 dargestellten Stellung gedreht bzw. geschwenkt werden, können sie die optische Achse OA des jeweiligen Brillenglases in eine vorgebbare Richtung bezüglich der Bezugsebene ausrichten. Die Stangen 70, 72 und 74 und somit deren Aufnahmen werden mit Hilfe von nicht dargestellten Stellantrieben gedreht bzw. geschwenkt. Zu diesem Zweck liefert die Steuereinrichtung 68 ein Aufnahmesteuersignal RCS an die Halteeinrichtung 46, das die Soll-Stellung der Aufnahmen vorgibt. Die Halteeinrichtung 46 liefert an die Steuereinrichtung 68 ein Aufnahmesignal RS, das der Ist-Stellung der Aufnahmen entspricht (siehe Figur 15).

Der Laserkopf 54 der Vorrichtung gemäß dem zweiten Ausführungsbeispiel unterscheidet sich von dem Laserkopf 54 der Vorrichtung gemäß dem ersten Ausführungsbeispiel dadurch, dass er zusätzlich zu dem Laser, der den Laserstrahl 30 erzeugen und aussenden kann, und der gegebenenfalls in den Laserkopf 54 integrierten Strahlablenkeinrichtung 66 einen Sensor 76 aufweist, der reflektiertes Laserlicht erfassen kann (siehe Figur 15). Aufgrund des mittels des Sensors 76 erfassten, reflektierten Laserlichts liefert der Laserkopf 54 ein Sensorsignal SS an die Steuereinrichtung 68.

Die Steuereinrichtung 68 ermittelt aus dem Sensorsignal SS die Entfernung zwischen dem Laserkopf 54 und dem Auftreffpunkt des Laserstrahls 30 an einem Objekt, beispielsweise am Brillenglas 2, nach an sich bekannten Verfahren, beispielsweise dem Impulsverfahren oder dem Phasenverfahren, so dass durch zeilen- oder rasterartiges Überstreichen des Brillenglases 2 mittels des Laserstrahls 30 die Geometrie des Brillenglases 2 ermittelt bzw. vermessen werden kann.

Ferner ermittelt die Steuereinrichtung 68 aus dem Sensorsignal SS die Intensität des reflektierten Laserstrahls und ermittelt sie aus dem Verhältnis der Intensität des reflektierten Laserstrahls und der Intensität des ausgesandten Laserstrahls 30 den Reflexionsgrad am jeweiligen Auftreffpunkt.

Bei der vorstehend erläuterten Vermessung der Geometrie des Brillenglases und bei der Ermittlung des Reflexionsgrades der Oberfläche des Brillenglases arbeitet der Laserkopf 54 im Messbetrieb. Außerdem kann der Laserkopf 54 im Bearbeitungsbetrieb arbeiten, während dessen er in der vorstehend anhand der Figuren 4, 5, 8A und 8B beschriebenen Weise im jeweiligen Bearbeitungsbereich seine Scanbewegung ausgeführt und dadurch die Beschichtung abgetragen wird. Es versteht sich, dass die Laserleistung im Messbetrieb auf einen so geringen Wert gesteuert wird, dass im Messbetrieb weder die Vorrichtung beschädigt, noch die Brillengläser bearbeitet werden. Im Bearbeitungsbetrieb wird die Leistung des Laserstrahls auf einen so hohen Wert gesteuert, dass sie zum Bearbeiten eines Brillenglases durch lokales Abtragen von dessen Beschichtung im Bearbeitungsbereich ausreicht.

Der vorstehend beschriebene Laserkopf 54 der Vorrichtung gemäß dem zweiten Ausführungsbeispiel ist sowohl für den Messbetrieb als auch für den Bearbeitungsbetrieb geeignet, d.h. die Messungen und die Bearbeitung erfolgen mittels desselben Laserkopfes 54. Alternativ dazu können zwei Laserköpfe vorgesehen sein, von denen der eine für den Messbetrieb geeignet ist und lediglich den Messbetrieb ausführt und der andere für den Bearbeitungsbetrieb geeignet ist und lediglich diesen ausführt.

Die Vorrichtungen und das Verfahren gemäß dem zweiten Ausführungsbeispiels zeichnen sich dadurch aus, dass mittels der Vorrichtung und bei dem Verfahren selbsttätig die Scheibenform eines jeweiligen Brillenglases ermittelt und dieser die Bearbeitungsbereiche zugeordnet werden, selbsttätig die Glasart ermittelt und dieser die erforderliche Leistungsdichte zugeordnet wird und selbsttätig die Krümmung vermessen und dementsprechend die Laserleistung bestimmt wird, so dass es sich im Unterschied zum ersten Ausführungsbeispiel erübrigt, diesbezügliche Daten für jede Aufnahme in die Steuereinrichtung 68 einzugeben. Die im Zusammenhang mit dem ersten Ausführungsbeispiel erläuterten Eingaben "Aufnahme", "Bearbeitungsbereiche", "Glasart" und "Krümmung" brauchen daher bei dem zweiten Ausführungsbeispiel nicht zu erfolgen. Dies wird im Folgenden näher erläutert.

Damit Brillengläser mittels der Vorrichtung gemäß dem zweiten Ausführungsbeispiel bearbeitet werden können, werden diese an den Aufnahmen der Vorrichtung angeordnet, wobei dies wiederum mit Hilfe der Glashalter 38 erfolgt, die in die Zapfenlöcher der Aufnahmen gesteckt werden. Für die folgenden Erläuterungen gilt, dass das jeweilige Brillenglas 2 mit seiner Vorderseite 3 am Glashalter 38 lösbar befestigt ist. Jedes Brillenglas kann an einer beliebigen der Aufnahmen angeordnet werden, ohne dass vorgeschrieben wird, welches Brillenglas an welcher Aufnahme anzuordnen ist, und ohne dass bekannt zu sein braucht, welches Brillenglas an welcher Aufnahme angeordnet worden ist.

Nachdem die Brillengläser in der Vorrichtung bzw. an deren Aufnahmen angeordnet worden sind, werden die folgenden, in dem Blockdiagramm gemäß Figur 16 gezeigten Schritte ausgeführt.

Zunächst wird in einem Schritt S1 der Laserkopf 54 über einer der Aufnahmen und somit über dem dort angeordneten Brillenglas positioniert. Der Laserkopf 54 wird dann im Messbetrieb betrieben, während die Stangen 70, 72 und 74 und deren Aufnahmen ihre in Figur 14 gezeigte Stellung einnehmen, so dass die optischen Achsen der Brillengläser zu der Bezugsebene im Wesentlichen senkrecht verlaufen und die Rückseiten der Brillengläser dem Laserkopf 54 zugewandt sind. Figur 17 zeigt in Draufsicht das Brillenglas 2 in dieser Position, und Figur 18 zeigt eine Ansicht desselben Brillenglases bei Betrachtung in Richtung des Pfeils C in Figur 17. Während des Messbetriebs überstreicht der vom Laserkopf 54 ausgesandte Laserstrahl 30 entlang Zeilen 80 und 82 den Bereich der Aufnahmen. Aus dem dabei erzeugten Sensorsignal SS und dem Positionssignal PS ermittelt die Steuereinrichtung 68 die Orte von Punkten des Randes 5 des Brillenglases 2 im Bezugskoordinatensystem und vermisst sie schließlich dessen gesamten Umriss 20, wie dies im Blockdiagramm gemäß Figur 16 als Schritt S2 gezeigt ist. Durch diese Vermessung des Umrisses 20 ermittelt die Steuereinrichtung 68 selbsttätig erstens, ob sich überhaupt ein Brillenglas an der Aufnahme befindet, über der der Laserkopf 54 angeordnet ist. Zweitens ermittelt die Steuereinrichtung 68 durch die Vermessung des Umrisses 20 selbsttätig, welchen Umriss 20 das Brillenglas 2 hat. Drittens ermittelt die Steuereinrichtung 68 durch die Vermessung des Umrisses selbsttätig, wo sich der Rand 5 des Brillenglases 2 und dessen geometrischer Mittelpunkt im Bezugskoordinatensystem tatsächlich befinden. Dies wird bei der späteren Positionierung des Laserstrahls im Bearbeitungsbereich und während der Bearbeitung desselben berücksichtigt. Dadurch kann Fehlern vorgebeugt werden, die ansonsten durch fehlerhaftes Befestigen des Brillenglases am Glashalter und/oder durch Fehler bei der Eingabe "Aufnahme" und bei der Eingabe "Bearbeitungsbereiche" entstehen könnten.

Im Speicher M der Steuereinrichtung 68 ist eine Datentabelle gespeichert, in der für jede in Frage kommende Scheibenform die dieser zugeordneten Bearbeitungsbereiche nach Ort, Form und Größe im Glaskoordinatensystem gespeichert sind. In einem Schritt S3 vergleicht die Steuereinrichtung 68 den gemessenen Umriss 20 mit den in der Datentabelle im Speicher M gespeicherten Scheibenformen, ermittelt auf diese Weise, welche Scheibenform das vermessene Brillenglas hat, und liest für diese Scheibenform aus dem Speicher M die zugeordneten Bearbeitungsbereiche nach Ort, Größe und Form aus. Auf der Grundlage dieser Daten zu den Bearbeitungsbereichen und der aus der Umrissmessung bekannten Orten aller Punkte auf der Oberfläche und am Rand des Brillenglases im Bezugskoordinatesystem gibt die Steuereinrichtung 68 das Positionssteuersignal PCS derart vor, dass der Laserkopf 54 mittels der Stelleinrichtung 62 im Bezugskoordinatensystem oberhalb des jeweiligen Bearbeitungsbereichs positioniert wird und dass der Laserstrahl im gesamten Bearbeitungsbereich die Scanbewegung ausführt, die vorstehend bereits anhand der Figuren 4, 5, 8A und 8B erläutert worden ist.

Aus dem vom Sensor 76 während der Vermessung des Umrisses 20 gelieferten Sensorsignal SS oder aus einem Sensorsignal SS, das während einer unabhängig von der Umrissvermessung durchgeführten Abtastung der Oberfläche des Brillenglases erzeugt wird, ermittelt die Steuervorrichtung 68 in einem Schritt S4 den maximalen Reflexionsgrad des Brillenglases. In Vorversuchen ist für jede Glasart ermittelt worden, welchen maximalen Reflexionsgrad sie hat, und ferner ist in Vorversuchen ermittelt worden, welche Leistungsdichte unter Berücksichtigung der Scangeschwindigkeit v erforderlich ist, um die jeweilige Beschichtung in ihrer gesamten Dicke abzutragen. Die Daten zu den maximalen Reflexionsgraden und der zugeordneten erforderlichen Leistungsdichte sind im Speicher M der Steuereinrichtung 68 gespeichert. Durch einen Vergleich des gemessenen maximalen Reflexionsgrades mit den gespeicherten maximalen Reflexionsgraden ermittelt die Steuereinrichtung 68 die Glasart des Brillenglases, dessen maximaler Reflexionsgrad gemessen wurde, und liest die Steuereinrichtung 68 für diese Glasart in einem Schritt S5 die zugeordnete erforderliche Leistungsdichte aus dem Speicher aus. Diese Leistungsdichte wird der Bestimmung des Strahlsteuersignals BCS zugrunde gelegt, mittels dessen während der Bearbeitung im Bearbeitungsbereich die Laserleistung gesteuert wird. Wenn auf diese Weise durch die Messung des maximalen Reflexionsgrades die erforderliche Leistungsdichte selbsttätig von der Steuereinrichtung 68 ermittelt wird, erübrigt sich die Eingabe "Glasart" und werden Bearbeitungsfehler aufgrund von Fehlern bei der Eingabe "Glasart" vermieden.

In einem weiteren Schritt S6 wird die Krümmung derjenigen Oberfläche des Brillenglases 2 vermessen, auf der die Bearbeitungsbereiche liegen. In den Figuren 15 bis 21 ist dies die Vorderseite 3 des Brillenglases 2, mit der das Brillenglas am Glashalter 38 lösbar befestigt ist. Vorzugsweise wird die Krümmung des Brillenglases vermessen, während seine optische Achse OA im Wesentlichen parallel zu der Bezugsebene und somit im Wesentlichen senkrecht zu der Richtung des Laserstrahls 30 ausgerichtet ist, wobei der Laserstrahl 30 wegen der Krümmung der Vorderseite 3 dennoch unter einem Einfallswinkel auftrifft, der kleiner als 90° ist. Zu diesem Zweck werden die Stangen 70, 72 und 74 und somit deren Aufnahmen aus ihrer in den Figuren 14, 17 und 18 gezeigten Stellung um ungefähr 90° gedreht, so dass sich die in Figur 19 schematisch gezeigte Position des Brillenglases relativ zu dem Laserstrahl 30 ergibt. Während der Vermessung der Krümmung im Schritt S6 wird der Laserkopf 54 im Messbetrieb betrieben, wobei er wiederum zeilenweise die Oberfläche des Brillenglases 2, und zwar dessen Vorderseite 3, überstreicht. Aus dem dabei gelieferten Sensorsignal SS ermittelt die Steuereinrichtung 68 die Krümmung der Vorderseite 3 des Brillenglases. Durch diese selbsttätige Ermittlung der Krümmung des Brillenglases erübrigt sich die Eingabe "Krümmung" und können Bearbeitungsfehler aufgrund von Fehlern bei der Eingabe "Krümmung" vermieden werden.

Die Bearbeitung der Bearbeitungsbereiche im Bearbeitungsbetrieb erfolgt, nachdem die Stangen 70, 72, und 74 und somit deren Aufnahmen um weitere 90° aus der in Figur 19 gezeigten Stellung gedreht bzw. geschwenkt worden sind, so dass die optische Achse des Brillenglases im Wesentlichen senkrecht zu der Bezugsebene ausgerichtet ist, wobei die Vorderseite 3 des Brillenglases nunmehr nach oben weist und somit dem Scankopf 54 zugewandt ist. In dieser Position ist das Brillenglas schematisch in den Figuren 20 und 21 gezeigt, wobei Figur 20 eine Draufsicht auf das an der Stange 72 angeordnete Brillenglas 2 zeigt und Figur 21 eine Ansicht bei Betrachtung in Richtung des Pfeils E in Figur 20 zeigt. Da die Stange 72 mit ihren Aufnahmen und somit das Brillenglas 2 aus der in den Figuren 17 und 18 gezeigten Position um insgesamt 180° gedreht worden sind, ist das Brillenglas 2 unterhalb der Stange 72 angeordnet, so dass die auf der Vorderseite 3 liegenden Bearbeitungsbereiche 26 und 28 dem Laserkopf 54 zugewandt sind und der Laserstrahl 30 auf die Bearbeitungsbereiche gerichtet werden kann.

Die Bearbeitungsbereiche nach Gestalt, Größe und Ort im Bezugskoordinatensystem sind bereits im Schritt S3 ermittelt worden. Die erforderliche Leistungsdichte ist unter Berücksichtigung der Glasart bereits im Schritt S5 ermittelt worden. Aus der im Schritt S6 vermessenen Krümmung berechnet die Steuereinrichtung 68 den Einfallswinkel des Laserstrahls für jede Position des Auftreffpunktes in den Bearbeitungsbereichen 26 und 28, wie dies bereits vorstehend anhand der Figuren 12 und 13 erläutert worden ist. In einem Schritt S7 berechnet dann die Steuereinrichtung 68 für jede Position des Auftreffpunktes die Leistung des Laserstrahls, die unter Berücksichtigung des aus der vermessenen Krümmung berechneten Einfallswinkels des Laserstrahls notwendig ist, um die Bearbeitung im Bearbeitungsbereich an allen Positionen des Auftreffpunktes mit der gleichen, im Schritt S5 bestimmten Leistungsdichte auszuführen. Mit dieser Laserleistung wird dann in einem Schritt S8 im Bearbeitungsbetrieb die Beschichtung in den Bearbeitungsbereichen 26 und 28 abgetragen, wie dies zuvor bereits anhand der Figuren 4 und 5 erläutert worden ist.

Vorstehend ist beschrieben, dass der Schritt S4 nach dem Schritt S2 ausgeführt wird und dass der Schritt S6 nach dem Schritt S4 ausgeführt wird. Abweichend davon können diese Schritte in beliebiger anderer Reihenfolge ausgeführt werden. Die Schritte S1 bis S8 werden für jede der Aufnahmen ausgeführt. Dies allerdings nur dann, wenn im jeweils zuerst ausgeführten der Schritte S2, S4 und S6 festgestellt wird, dass an der jeweiligen Aufnahme ein Brillenglas vorhanden ist. Ferner ist es nicht notwendig, alle Schritte S1 bis S8 an einer Aufnahme durchzuführen, bevor diese Schritte an einer der anderen Aufnahmen ausgeführt werden. Vielmehr kann jeder der Schritte S2, S4 und S6 zunächst an allen Aufnahmen ausgeführt werden, wonach dann einer der beiden übrigen der Schritte S2, S4 und S6 an allen Aufnahmen ausgeführt wird und schließlich der verbleibende der Schritte S2, S4 und S6 an allen Aufnahmen ausgeführt wird. Dementsprechend kann der Schritt S8 nacheinander an allen Aufnahmen ausgeführt werden, nachdem zuvor für alle Aufnahmen die Schritte S2 bis S7 ausgeführt worden sind.

Bei dem vorstehend beschriebenen zweiten Ausführungsbeispiel des Verfahrens erfolgt sowohl eine Vermessung des Umrisses (Schritt S2) als auch eine Messung des Reflexionsgrades (Schritt S4) als auch eine Vermessung der Krümmung (Schritt S6). Obwohl dies vorzugsweise geschieht, ist dies bei der Erfindung nicht unbedingt notwendig. Vielmehr führt jeder einzelne dieser Schritte bereits zu Vorteilen bei der Bearbeitung der Brillengläser, selbst wenn die übrigen dieser Schritte nicht ausgeführt werden.

Mittels des Verfahrens und der Vorrichtung gemäß der Erfindung werden beschichtete Brillengläser bearbeitet, um an diesen Fügeflächen auszubilden, die ein zuverlässiges Verkleben der Brillengläser mit der Brücke und den Backen einer randlosen Brille ermöglichen. Bei dem Verfahren ist vorgesehen, dass für das jeweilige Brillenglas zwei Bearbeitungsbereiche mit deren Gestalt, Größe und Ort am Brillenglas vorgegeben werden und dass in den zwei vorgegebenen Bearbeitungsbereichen die Beschichtung am Brillenglas lokal durch Bestrahlen mit einem Laserstrahl abgetragen wird. Die Vorrichtung zeichnet sich aus durch eine Halteeinrichtung mit zumindest einer Aufnahme für ein Brillenglas, eine Laserstrahlvorrichtung mit einem Laserkopf zur Erzeugung eines Laserstrahls, eine Stelleinrichtung zum Bewegen der Halteeinrichtung und des Laserkopfes relativ zueinander in einer Bezugsebene, und eine Steuereinrichtung für die Laserstrahlvorrichtung und die Stelleinrichtung, wobei mittels der Steuereinrichtung die Laserleistung, die Relativstellung zwischen dem Laserkopf und dem zumindest einen Brillenglas sowie eine Scanbewegung des Laserstrahls steuerbar sind.

## Patentansprüche

1. Verfahren zum Bearbeiten von beschichteten, Brillengläsern, mit den folgenden Schritten:
a) für das jeweilige Brillenglas (2) werden zwei Bearbeitungsbereiche (26, 28) mit deren Gestalt, Größe und Ort am Brillenglas (2) vorgegeben;
b) in den zwei vorgegebenen Bearbeitungsbereichen (26, 28) wird die Beschichtung am Brillenglas (2) lokal durch Bestrahlen mit einem Laserstrahl (30) abgetragen.

2. Verfahren nach Anspruch 1, **dadurch gekennzeichnet, dass** im Schritt b) die Laserleistung in Abhängigkeit vom Einfallswinkel (α) des Laserstrahles (30) auf die Oberfläche des beschichteten Brillenglases (2) gesteuert wird.

3. Verfahren nach Anspruch 1 oder 2, **dadurch gekennzeichnet, dass** im Schritt b) die Laserleistung in Abhängigkeit vom Werkstoff des Brillenglases (2) und dem Aufbau der Beschichtung gesteuert wird.

4. Verfahren nach Anspruch 1, **dadurch gekennzeichnet, dass** mittels einer Laserstrahlvorrichtung (54) der Umriss (20) des Brillenglases (2) vermessen und dadurch dessen Scheibenform ermittelt wird.

5. Verfahren nach Anspruch 4, **dadurch gekennzeichnet, dass** jeder von mehreren verschiedenen vorgebbaren Scheibenformen die vorgegebenen Orte der Bearbeitungsbereiche (26, 28) zugeordnet werden und dass im Schritt b) die Bearbeitung in den Bearbeitungsbereichen (26, 28) mit den der ermittelten Scheibenform zugeordneten Orten erfolgt.

6. Verfahren nach einem der Ansprüche 1, 4 oder 5, **dadurch gekennzeichnet, dass** mittels einer Laserstrahlvorrichtung (54) der Reflexionsgrad der Oberfläche des Brillenglases (2) gemessen wird.

7. Verfahren nach Anspruch 6, **dadurch gekennzeichnet, dass** in Vorversuchen für jedes von mehreren Brillengläsern, die sich hinsichtlich ihres Grundwerkstoffs und/oder des Aufbaus ihrer Beschichtung unterscheiden, der Reflexionsgrad ermittelt wird und die zum Abtragen der Beschichtung erforderliche Leistungsdichte des Laserstrahls (30) bestimmt wird, so dass eine Zuordnung von Reflexionsgrad und Leistungsdichte erhalten wird, und dass im Schritt b) die Leistung des Laserstrahls (30) derart gesteuert wird, dass sich die dem gemessenen Reflexionsgrad zugeordnete Leistungsdichte ergibt.

8. Verfahren nach einem der Ansprüche 1 oder 4 bis 7, **dadurch gekennzeichnet, dass** mittels einer Laserstrahlvorrichtung (54) die Krümmung derjenigen Oberfläche des Brillenglases (2) vermessen wird, die im Schritt b) bearbeitet wird.

9. Verfahren nach Anspruch 8, **dadurch gekennzeichnet, dass** der Einfallswinkel (α) des Laserstrahls (30) auf die Oberfläche des Brillenglases (2) im Bearbeitungsbereich (26, 28) aus der gemessenen Krümmung ermittelt wird und dass im Schritt b) die Leistung des Laserstrahles (30) derart gesteuert wird, dass sich unter Berücksichtung des ermittelten Einfallswinkels (α) eine im Wesentlichen gleiche Leistungsdichte im gesamten Bearbeitungsbereich (26, 28) ergibt.

10. Vorrichtung zum Bearbeiten von beschichteten, Brillengläsern, mit einer Halteeinrichtung (46) mit zumindest einer Aufnahme (48, 50, 52) für ein Brillenglas (2), einer Laserstrahlvorrichtung mit einem Laserkopf (54) zur Erzeugung eines Laserstrahls (30),
wobei die Laserleistung des Laserstrahls (30) derart steuerbar ist, dass sie zum Bearbeiten des zumindest einen Brillenglases (2) durch lokales Abtragen von dessen Beschichtung ausreicht, so dass der Laserkopf (54) zum Bearbeiten des zumindest einen Brillenglases geeignet ist, einer Stelleinrichtung (62) zum Bewegen der Halteeinrichtung (46) und des Laserkopfes (54) relativ zueinander in einer Bezugsebene, und einer Steuereinrichtung (68) für die Laserstrahlvorrichtung und die Stelleinrichtung (62), wobei mittels der Steuereinrichtung (68) die Laserleistung, die Relativstellung zwischen dem Laserkopf (54) und dem zumindest einen Brillenglas (2) sowie eine Scanbewegung des Laserstrahls (30) steuerbar sind.

11. Vorrichtung nach Anspruch 10, **dadurch gekennzeichnet, dass** die zumindest eine Aufnahme (48, 50, 52) der Halteeinrichtung (46) derart schwenkbar ist, dass sie die optische Achse (OA) des an ihr angeordneten Brillenglases (2) bezüglich der Bezugsebene unterschiedlich ausrichten kann.

12. Vorrichtung nach Anspruch 10 oder 11, **dadurch gekennzeichnet, dass** die Halteeinrichtung (46) mehrere Aufnahmen (48, 50, 52) für jeweils ein Brillenglas (2) aufweist.

13. Vorrichtung nach Anspruch 12, **dadurch gekennzeichnet, dass** die Halteeinrichtung (46) mehrere parallel zueinander verlaufende Stangen (70, 72, 74) aufweist, die jeweils mit mehreren Aufnahmen (48, 50, 52) versehen sind.

14. Vorrichtung nach einem der Ansprüche 10 bis 13, **dadurch gekennzeichnet, dass** die Stelleinrichtung (62) einen ersten Schlitten (56), der den Laserkopf (54) trägt, einen zweiten Schlitten (58), an dem der erste Schlitten (56) in einer ersten Richtung verfahrbar ist, und Schienen (60) aufweist, an denen der zweite Schlitten (58) in einer zweiten, von der ersten Richtung verschiedenen Richtung verfahrbar ist.

15. Vorrichtung nach einem der Ansprüche 10 bis 14, **dadurch gekennzeichnet, dass** die Laserstrahlvorrichtung zusätzlich zu dem Laserkopf (54), der zum Bearbeiten des zumindest einen Brillenglases (2) geeignet ist, einen zweiten Laserkopf aufweist, der zum Vermessen der Geometrie des zumindest einen Brillenglases (2) geeignet ist.

16. Vorrichtung nach einem der Ansprüche 10 bis 14, **dadurch gekennzeichnet, dass** die Laserstrahlvorrichtung einen einzigen Laserkopf (54) aufweist, der sowohl zum Vermessen der Geometrie des zumindest einen Brillenglases (2) als auch zum Bearbeiten des Brillenglases (2) geeignet ist.

17. Vorrichtung nach einem der Ansprüche 15 oder 16, **dadurch gekennzeichnet, dass** der zweite Laserkopf bzw. der einzige Laserkopf (54) einen Laser, der einen Laserstrahl bzw. den Laserstrahl (30) erzeugen und aussenden kann, und einen Sensor (76) aufweist, der reflektiertes Laserlicht erfassen und ein entsprechendes Sensorsignal (SS) liefern kann.

18. Vorrichtung nach Anspruch 17, **dadurch gekennzeichnet, dass** die Steuereinrichtung (68) derart ausgebildet ist, dass sie aufgrund des Sensorsignals (SS) die Scheibenform des Brillenglases (2) ermitteln kann.

19. Vorrichtung nach Anspruch 18, **dadurch gekennzeichnet, dass** die Steuereinrichtung (68) einen Speicher (M) zum Speichern von mehreren verschiedenen vorgebbaren Scheibenformen und diesen zugeordneten Orten von Bearbeitungsbereichen (26, 28) am Brillenglas (2) aufweist.

20. Vorrichtung nach einem der Ansprüche 17 bis 19, **dadurch gekennzeichnet, dass** die Steuereinrichtung (68) derart ausgebildet ist, dass sie aufgrund des Sensorsignals (SS) den Reflexionsgrad der Oberfläche des Brillenglases (2) ermitteln kann.

21. Vorrichtung nach Anspruch 20, **dadurch gekennzeichnet, dass** die Steuereinrichtung (68) einen Speicher (M) zum Speichern der Reflexionsgrade von Brillengläsern (2) aufweist, die sich hinsichtlich ihres Grundwerkstoffs und/oder des Aufbaus ihrer Beschichtung unterscheiden.

22. Vorrichtung nach einem der Ansprüche 17 bis 21, **dadurch gekennzeichnet, dass** die Steuereinrichtung (68) derart ausgebildet ist, dass sie aufgrund des Sensorsignals (SS) die Krümmung derjenigen Oberfläche des Brillenglases (2) ermitteln kann, auf die der vom Laser ausgesandte Laserstrahl (30) einfällt.
